# EUROPÄISCHE PATENTSCHRIFT

(11) **EP 1 658 211 B1**
(45) Veröffentlichungstag und Bekanntmachung des Hinweises auf die Patenterteilung: **17.01.2007**
(21) Anmeldenummer: 04764278.0
(22) Anmeldetag: 19.08.2004
(51) Int. Cl.: B60T 7/22, G01S 13/93, B60T 7/12

(54) **RANGIERHILFESYSTEM FÜR KRAFTFAHRZEUG**
MANEUVERING ASSISTANCE SYSTEM FOR A MOTOR VEHICLE
SYSTEME FACILITANT LES MANOEUVRES D'UN VEHICULE AUTOMOBILE

(30) Priorität: 26.08.2003 DE 10339075
(43) Veröffentlichungstag der Anmeldung: 24.05.2006
(73) Patentinhaber: DaimlerChrysler AG, 70567 Stuttgart (DE)
(72) Erfinder: BAUER, Wolf-Dietrich, 70771 Leinfelden-Echterdingen (DE); EBEL, Peter, 74542 Braunsbach (DE); KIRCHMANN, Albert, 73760 Ostfildern (DE); MAYER, Christian, 72762 Reutlingen (DE); SCHWARZHAUPT, Andreas, 76829 Landau (DE); SPIEGELBERG, Gernot, 71296 Heimsheim (DE); STAHL, Wolfgang, 72644 Oberboihingen (DE); SULZMANN, Armin, 68723 Oftersheim (DE)
(86) Internationale Anmeldenummer: PCT/EP2004/009294
(87) Internationale Veröffentlichungsnummer: WO 2005/021344

(56) Entgegenhaltungen:
- EP-A- 1 332 948
- WO-A-03/045726
- DE-A- 3 844 340
- DE-A- 10 113 323
- DE-A- 19 646 559
- DE-A- 19 715 622

## Beschreibung

Die vorliegende Erfindung betrifft ein Kraftfahrzeug, insbesondere ein Nutzfahrzeug mit den Merkmalen des Oberbegriffs des Anspruchs 1.

Ein derartiges Kraftfahrzeug ist beispielsweise aus der DE 100 32 179 A1 bekannt und weist einen elektronisch ansteuerbaren Antriebsstrang auf, der zumindest eine Lenkungsanlage, eine Bremsanlage und ein Antriebsaggregat des Fahrzeugs umfasst. Zur Betätigung des Antriebsstrangs sind manuell bedienbare Betätigungselemente, wie z.B. ein Gaspedal, ein Bremspedal und eine Lenkhandhabe oder ein die Funktionen von Bremspedal, Gaspedal und/oder Lenkrad umfassender Joystick oder Drivestick, vorgesehen. Die Betätigungselemente erzeugen bei ihrer Betätigung Steuerbefehle, die von Aktuatoren der jeweiligen Komponenten des Antriebsstrangs ausgeführt werden. Die Befehle werden dabei in Form von elektrischen Signalen elektronisch übermittelt. Eine mechanische oder eine hydraulische Zwangskopplung zwischen den Betätigungselementen und den zugehörigen Komponenten des Antriebsstrangs, wie z.B. eine Lenksäule, eine Bremshydraulik oder ein Seilzug für das Gaspedal, sind hierbei grundsätzlich nicht erforderlich. Bei einem derartigen, elektronisch steuerbaren Antriebsstrang handelt es sich somit um ein Drive-By-Wire-System oder allgemein um ein X-By-Wire-System.

Beim Rangieren von Kraftfahrzeugen, insbesondere beim Rückwärtsfahren, ist vor allem bei Lastkraftwagen ein Einweiser nützlich, um die Kollisionsgefahr und Unfallgefahr zu reduzieren. Dies gilt umso mehr für Gespanne aus Zugmaschine und Anhänger oder Auflieger, die beim Rückwärtsfahren eine besonders komplexe Kinematik zeigen. Da bei gewerblich genutzten Fahrzeugen ein Einweiser vergleichsweise teuer ist, besteht der Wunsch, den Rangierbetrieb soweit zu vereinfachen, dass ein kostenintensiver Einweiser vermieden werden kann.

Aus der WO 030A5726 A ist ein Nutzfahrzeug mit einem Rangierhilfesystem bekannt. Bei einer Weiterbildung ist dort auch ein Notbremssystem offenbart. Dadurch soll die Kollisionsgefahr beim Rangieren reduziert werden. Zum Betrieb dieser automatischen Fahrerassistenzsysteme ist eine elektronische Ansteuerung der Lenkung, Bremsen und des Antriebs beschrieben.

Die EP 1 332 948 A1 beschreibt eine Ausführungsform eines automatischen Einparksystems für ein Kraftfahrzeug. Dieses parkt nach Betätigen einer Eingabemittels automatisch in eine Parklücke ein. Weitere Fahrerassistenzsysteme sind in der DE 38 44 340 A und in der DE 101 13 323 A offenbart.

Die vorliegende Erfindung beschäftigt sich mit dem Problem, für ein Kraftfahrzeug der eingangs genannten Art eine verbesserte Ausführungsform anzugeben, bei der insbesondere das Rangieren vereinfacht ist.

Erfindungsgemäß wird dieses Problem durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, das Kraftfahrzeug mit einem Rangierhilfesysteme auszustatten, bei dem auf einem Monitor die Istsituation des Fahrzeugs bezüglich einer Fahrzeugumgebung dargestellt wird, bei dem eine gewünschte Sollsituation für das Fahrzeug vorgebbar ist und bei dem mittels eines geeigneten Rangieralgorithmus der Antriebsstrang so angesteuert wird, dass das Fahrzeug automatisch unter Berücksichtigung der Fahrzeugumgebung aus seiner Istsituation in die gewünschte Sollsituation überführt wird. Beispielsweise kann ein erfindungsgemäß ausgestalteter Personenkraftwagen automatisch in eine seitliche Parklücke eingeparkt werden. Ebenso kann ein erfindungsgemäßes Gespann so angesteuert werden, dass sein Anhänger automatisch rückwärts an eine (enge) Verladerampe herangefahren wird. Die erfindungsgemäß vorgeschlagene Anzeigeeinrichtung zur Darstellung der Istsituation des Fahrzeugs sowie der aktuellen Fahrzeugumgebung vereinfacht die Eingabe der Sollsituation. Darüber hinaus ermöglicht der Monitor eine visuelle Überprüfung der ordnungsgemäßen Funktion des Rangierhilfesystems. Durch das automatisierte Rangieren des Fahrzeugs mittels eines Rangieralgorithmus ist es insbesondere möglich, Gefahrensituationen, die sich durch die Fahrzeugdynamik (Wanken, Kippen) oder aus der Fahrzeugkinematik (Verkeilung des Gespanns) ergeben können, zu vermeiden. Der Fahrzeugbetrieb wird dadurch sicherer.

Zweckmäßig kann eine fahrzeugfeste Bestimmungseinrichtung zur Ermittlung der Daten für die Istposition, die Istlage und die Fahrzeugumgebung vorgesehen sein. Im Hinblick auf die Darstellung der Istsituation des Fahrzeugs sowie der aktuellen Fahrzeugumgebung auf dem Monitor ist das erfindungsgemäße Fahrzeug bei dieser Ausführungsform autark, also unabhängig von externen Einrichtungen. Die Nutzbarkeit des Rangierhilfesystems wird dadurch erhöht.

Zusätzlich oder alternativ kann auch eine fahrzeugferne Bestimmungseinrichtung vorgesehen sein, die mit einem Datensender verbunden ist und somit eine Datenübertragung zu einem fahrzeugfesten Datenempfänger ermöglicht, der mit dem Rangierhilfesystem verbunden ist. Beispielsweise kann ein Speditionshof mit einer solchen fahrzeugfernen Bestimmungseinrichtung ausgestattet werden, wodurch eine höhere Genauigkeit für die Istwerte der Fahrzeugposition und Fahrzeuglage sowie für die Fahrzeugumgebung, also insbesondere die Position von Hindernissen, erzielt werden kann. Beispielsweise sind die Positionen von Verladestationen innerhalb des Speditionshofs bekannt und invariant, so dass die zugehörigen Positionsdaten vergleichsweise exakt ermittelt werden können. Des Weiteren kann eine fahrzeugferne Bestimmungseinrichtung die Koordination des Rangierbetriebs mehrerer Kraftfahrzeuge vereinfachen.

Bei einer Weiterbildung kommuniziert die Eingabeeinrichtung mit der Anzeigeeinrichtung derart, dass die Anzeigeeinrichtung zusätzlich die mit der Eingabeeinrichtung eingegebene Sollsituation des Fahrzeugs auf dem Monitor darstellt. Der Fahrzeugführer kann dadurch besonders einfach kontrollieren, ob die gewünschte Sollsituation zur ermittelten Fahrzeugumgebung passt. Bei einer besonders komfortablen Weiterbildung kann die Sollsituation mit Hilfe eines Eingabeelementes eingegeben werden, wobei die Sollsituation gleichzeitig auf dem Monitor dargestellt wird. Das Eingabeelement ist beispielsweise so ausgestaltet, dass damit ein Cursor oder Mauszeiger auf dem Monitor verstellt werden kann. Hierdurch kann die gewünschte Sollsituation mit Hilfe des Monitors besonders einfach vorgegeben werden. Für das Rangierhilfesystem ergibt sich somit eine besonders einfache Handhabung.

Das Fahrzeug kann außerdem mit einem Notbremssystem ausgestattet sein, das mit einer fahrzeugfesten Abstandssensorik kommuniziert und zum automatischen Abbremsen des Fahrzeugs ausgebildet ist, wenn das Notbremssystem eine Kollisionsgefahr zwischen dem Fahrzeug und einem Hindernis erkennt. Bei einer besonders zweckmäßig Weiterbildung der vorliegenden Erfindung kann das Rangierhilfesystem mit einem derartigen Notbremssystem gekoppelt sein, derart, dass ein automatisches Abbremsen des Fahrzeugs durchgeführt wird, wenn beim Abarbeiten des Rangieralgorithmus eine Kollisionsgefahr für das Fahrzeug entsteht. Beispielsweise können sich die Umgebungsbedingungen des Fahrzeugs beim Rangieren ändern, was bei dieser Ausführungsform zur Vermeidung einer Kollision berücksichtigt werden kann. Diese Weiterbildung erhöht somit die Fahrzeugsicherheit.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine stark vereinfachte Seitenansicht auf ein erfindungsgemäßes Fahrzeug,
- Fig. 2: eine schaltplanartige Prinzipdarstellung eines erfindungsgemäßen Rangierhilfesystems,
- Fig. 3: eine stark vereinfachte Prinzipdarstellung einer Fernbedieneinrichtung nach der Erfindung,
- Fig. 4: eine stark vereinfachte Draufsicht auf ein erfindungsgemäßes Fahrzeug,
- Fig. 5: eine Prinzipdarstellung einer Abbildung, wie sie auf einem Monitor des erfindungsgemäßen Rangierhilfesystems wiedergegeben ist,
- Fig. 6: eine Darstellung wie in Fig. 5, jedoch bei einer anderen Ausführungsform.

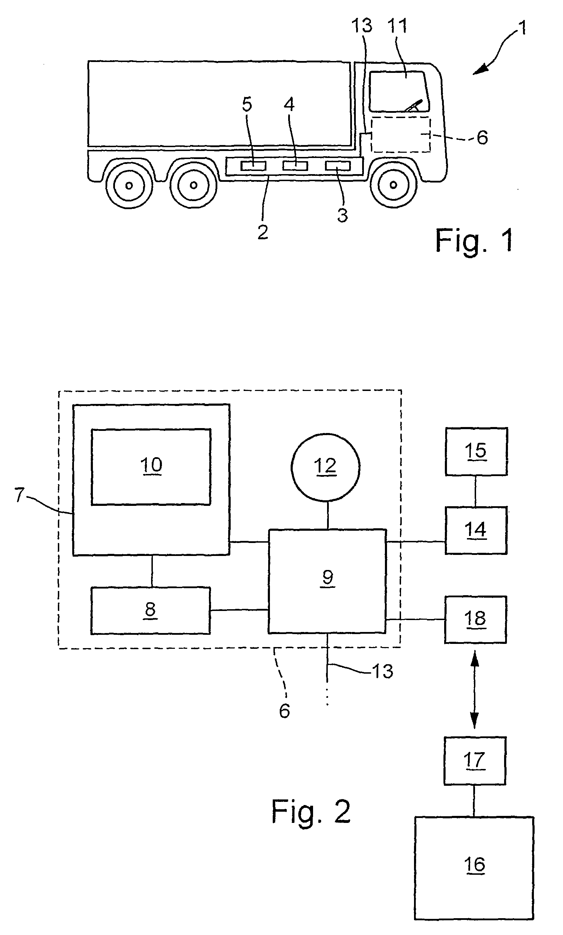

Entsprechend Fig. 1 ist ein erfindungsgemäßes Kraftfahrzeug 1 mit einem Antriebsstrang 2 ausgestattet, der elektronisch steuerbar ausgebildet ist. Der Antriebsstrang 2 umfasst zumindest ein Antriebsaggregat 3, eine Lenkanlage 4 sowie eine Bremsanlage 5. Des Weiteren kann der Antriebsstrang 2 zusätzlich ein elektronisch schaltbares Getriebe sowie eine Niveauregulierungseinrichtung aufweisen. Der Antriebsstrang 2 ist mittels üblicher, hier nicht dargestellter Sollwertgeber betätigbar bzw. ansteuerbar. Beispielsweise handelt es sich bei diesen Sollwertgebern um ein Gaspedal, ein Lenkrad, ein Bremspedal und um einen Schalthebel. Der Fahrzeugführer kann über die Sollwertgeber seinen Fahrerwunsch in das Fahrzeug 1 eingeben. Die Sollwertgeber wandeln den Fahrerwunsch in entsprechende Sollsignale um, die dem Antriebsstrang 2 zweckmä-ßig in Form eine Bewegungsvektors zugeführt werden. Der Antriebsstrang 2 bzw. dessen Komponenten (Antriebsaggregat 3, Lenkanlage 4 und Bremsanlage 5) können dann die Steuersignale abarbeiten, um so den Fahrerwunsch zu erfüllen.

Gemäß Fig. 1 kann es sich beim Kraftfahrzeug 1 um einen Lastkraftwagen handeln. Das Kraftfahrzeug 1 kann jedoch auch durch ein Gespann aus Zugmaschine und Anhänger oder Auflieger gebildet sein. Das Fahrzeug 1 kann auch ein beliebiges anderes Nutzfahrzeug oder auch ein Personenkraftwagen sein.

Das erfindungsgemäße Kraftfahrzeug ist außerdem mit einem Rangierhilfesystem 6 ausgestattet, das in Fig. 1 durch einen mit unterbrochener Linie dargestellten Rahmen repräsentiert ist. Entsprechend Fig. 2 umfasst das Rangierhilfesystem zumindest eine Anzeigeeinrichtung 7, eine Eingabeeinrichtung 8 sowie eine Steuerung 9. Die Anzeigeeinrichtung 7 arbeitet mit einem Monitor 10, der zweckmäßig in einem Fahrerhaus 11 (vgl. Fig. 1) des Fahrzeugs 1 so angeordnet ist, dass er vom Fahrzeugführer einsehbar ist.

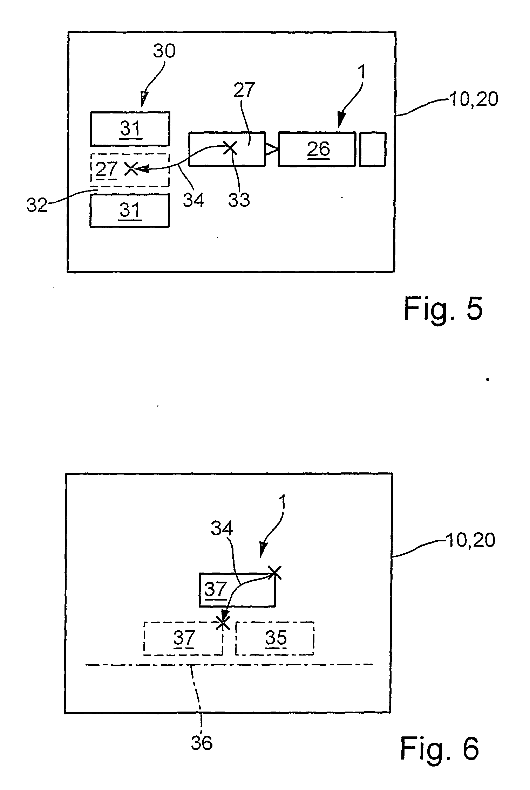

Die Anzeigeeinrichtung 7 ist so ausgebildet, dass sie auf dem Monitor 10 eine Istlage und eine Istposition des Fahrzeugs 1 sowie eine nähere Umgebung des Fahrzeugs 1 darstellen oder abbilden kann. Beispiele derartiger Abbildungen werden weiter unten mit Bezug auf die Fig. 5 und 6 näher erläutert.

Der Begriff "Fahrzeugposition" beschreibt im vorliegenden Zusammenhang die geographische Position des Fahrzeugs 1, während der Begriff "Fahrzeuglage" die Orientierung einer Längsachse des Fahrzeugs 1 in einem Bezugskoordinatensystem, das beispielsweise durch die Himmelsrichtungen definiert sein kann, beschreibt. Die nähere Fahrzeugumgebung umfasst zumindest teilweise einen das Fahrzeug 1 mit Abstand einschließenden Raum und beinhaltet somit Hindernisse in der Nähe des Fahrzeugs, wie z.B. andere Fahrzeuge, Leitplanken, Pfosten, Lichtmasten, Bordsteinkanten, Hauswände, Mauern und dergleichen.

Die Eingabeeinrichtung 8 ist so ausgestaltet, dass damit eine Solllage und eine Sollposition für das Fahrzeug 1 in das Rangierhilfesystem 6 eingegeben werden kann.

Die Steuerung 9 hat Zugriff auf einen Rangieralgorithmus 12 und ist über eine Leitung 13 mit dem Antriebsstrang 2 verbunden. Die Steuerung 9 ist so ausgestaltet, dass sie den Rangieralgorithmus 12 abarbeiten kann. Beim Abarbeiten des Rangieralgorithmus 12 steuert die Steuerung 9 den Antriebsstrang 2 so an, dass dieser das Fahrzeug 1 von der Istlage und der Istposition in die Solllage und Sollposition überführt, wobei diese Überführung unter Berücksichtigung der Fahrzeugumgebung erfolgt. Das heißt, eine Kollision zwischen dem Fahrzeug 1 und einem Hindernis wird automatisch vermieden; die Hinternisse werden umfahren.

Das Rangierhilfesystem 6 umfasst außerdem eine fahrzeugfeste Bestimmungseinrichtung 14, mit deren Hilfe die Daten für die Istposition, die Istlage und die Fahrzeugumgebung ermittelt werden können. Zu diesem Zweck kommuniziert die Bestimmungseinrichtung 14 mit der Anzeigeeinrichtung 7, hier über die Steuerung 9. Die Bestimmungseinrichtung 14 arbeitet mit einer fahrzeugfesten Abstandssensorik 15 zusammen, die entweder speziell für das Rangierhilfesystem 6 am Fahrzeug 1 angebracht ist oder am Fahrzeug 1 ohnehin vorhanden ist und im Rahmen anderer Systeme für die Ermittlung von Abständen zwischen Fahrzeug 1 und Hindernissen genutzt wird (z.B. ein Abstandshaltesystem).

Zusätzlich oder alternativ kann das Rangierhilfesystem 6 eine fahrzeugferne Bestimmungseinrichtung 16 aufweisen, die ebenso zur Ermittlung der Daten für die Istposition, die Istlage und die Fahrzeugumgebung dient. Die fahrzeugferne Bestimmungseinrichtung 16 ist mit einer ersten Datenübertragungseinrichtung 17 verbunden, die insbesondere einen Datensender umfasst. Das Rangierhilfesystem 6 ist dann mit einer fahrzeugfesten zweiten Datenübertragungseinrichtung 18 ausgestattet, die insbesondere einen Datenempfänger umfasst. Die zweite Datenübertragungseinrichtung kommuniziert mit der Anzeigeeinrichtung 7, hier wieder über die Steuerung 9.

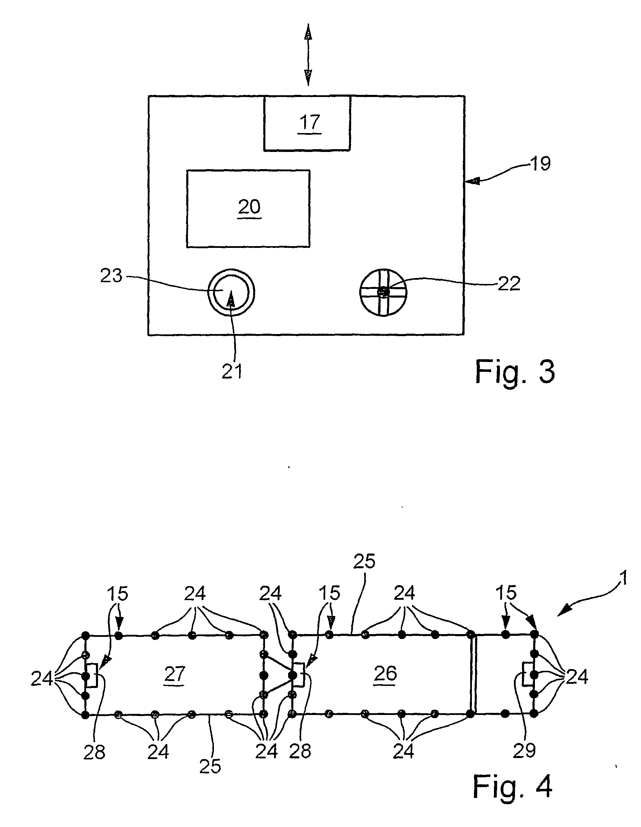

Gemäß Fig. 3 kann das erfindungsgemäße Rangierhilfesystem außerdem mit einer Fernbedieneinrichtung 19 ausgestattet sein, die ebenfalls mit einer ersten Datenübertragungseinrichtung 17 ausgestattet ist, die hier sowohl einen Datensender als auch einen Datenempfänger aufweist. Damit die fahrzeugfesten Komponenten des Rangierhilfesystems 6 mit der Fernbedieneinrichtung 19 kommunizieren können, ist das Rangierhilfesystem 6 auch bei dieser Ausführungsform mit einer fahrzeugfesten zweiten Übertragungseinrichtung 18 ausgestattet, die ebenfalls einen Datensender und einen Datenempfänger aufweist. Die Fernbedieneinrichtung 19 ist außerdem mit einem zusätzlichen Monitor 20 sowie mit einer zusätzlichen Eingabeeinrichtung 21 ausgestattet. Optional kann die Fernbedieneinrichtung 19 noch wenigstens ein Betätigungselement 22 aufweisen. Mit Hilfe dieses Betätigungselements 22 können Steuersignale zur Betätigung des Antriebsstrangs 2 generiert werden, die über die Datenübertragungseinrichtungen 17, 18 zum Antriebsstrang 2 gelangen. Auf diese Weise ist es möglich, das Fahrzeug 1 aus der Ferne mit Hilfe der Fernbedieneinrichtung 19 zu betätigen. Beim Betätigungselement 22 handelt es sich beispielsweise um einen Drivestick, mit dem die wichtigsten Komponenten des Antriebsstrang 2, nämlich Antriebsaggregat 3, Lenkanlage-4 und Bremsanlage 5, betätigt werden können. Die Datenübertragungseinrichtungen 17, 18 kommunizieren zweckmäßig drahtlos.

Die zusätzliche Eingabeeinrichtung 21 ist hier mit einem Eingabeelement 23 ausgestattet, mit dessen Hilfe manuell die Solllage und die Sollposition des Fahrzeugs 1 in das System eingegeben werden können. Beispielsweise handelt es sich bei diesem Eingabeelement 23 um einen Trackball oder dergleichen. Die zusätzliche Eingabeeinrichtung 21 kann darüber hinaus zumindest ein weiteres Eingabeelement aufweisen. Es ist klar, dass die fahrzeugfeste Eingabeeinrichtung 8 über entsprechende Eingabeelemente verfügt, die hier jedoch nicht dargestellt sind.

Gemäß einer vorteilhaften Weiterbildung kommuniziert die Eingabeeinrichtung, also die fahrzeugfeste Eingabeeinrichtung 8 und/oder die fahrzeugferne, zusätzliche Eingabeeinrichtung 21, mit der Anzeigeeinrichtung 7. Zweckmäßig ist die Anzeigeeinrichtung 7 nun so ausgestaltet, dass sie auf dem jeweiligen Monitor 10 bzw. 20 zusätzlich die mit Hilfe der jeweiligen Eingabeeinrichtung 8, 21 eingegebene Solllage und Sollposition des Fahrzeugs 1 darstellt. Hierdurch kann der Anwender unmittelbar das Ergebnis seiner Eingabe sehen und kontrollieren und gegebenenfalls korrigieren. Die Handhabung des Rangierhilfesystems 6 wird dadurch erheblich vereinfacht.

Gemäß Fig. 4 kann die fahrzeugfeste Abstandssensorik 15 beispielsweise mehrere Abstandssensoren 24 aufweisen, die entlang einer Außenkontur 25 des Fahrzeugs 1 vollständig umlaufend angeordnet sind. Das heißt, die Abstandssensoren 24 befinden sich sowohl an der Fahrzeugfront als auch am Fahrzeugheck sowie an beiden Fahrzeugseiten. Bei der hier gezeigten Ausführungsform handelt es sich beim Fahrzeug 1 um ein Gespann, das aus einer Zugmaschine 26 und einem Anhänger 27 besteht. Die Abstandssensoren 24 sind entlang der Außenkonturen 25 beider Bestandteile des Gespanns 26, 27 umlaufend angeordnet. Mit Hilfe dieser Abstandssensoren 24 kann die Umgebung des Fahrzeugs 1 entlang der gesamten Außenkontur 25 des Fahrzeugs abgetastet werden. Die Abstandssensoren 24 können z.B. als Ultraschallsensoren ausgebildet sein.

Zusätzlich oder alternativ kann die Abstandssensorik 15 am Heck des Fahrzeugs 1 eine Kamera 28 aufweisen. Da es sich hier um ein Gespann 26, 27 handelt, ist sowohl am Heck des Anhängers 27 als auch am Heck der Zugmaschine 26 eine solche Kamera 28 angebracht. Mit Hilfe einer derartigen Kamera 28 kann die rückwärtige Umgebung des Fahrzeugs 1 erfasst werden.

Zusätzlich oder alternativ kann die Abstandssensorik 15 ein an der Frontseite des Fahrzeugs 1 angeordnetes Radargerät 29 aufweisen, mit dessen Hilfe die Umgebung vor dem Fahrzeug 1 nach Hindernissen abgetastet wird. Bei den genannten Komponenten der Abstandssensorik 15 handelt es sich jeweils um Komponenten, die bereits im Rahmen anderer Fahrzeugsysteme am Fahrzeug 1 vorhanden sein können. Wie erläutert, greift daserfindungsgemäße Rangierhilfesystem 6 dann zweckmäßig auf die ohnehin am Fahrzeug 1 vorhandenen Elemente der Abstandssensorik 15 zurück. Der Aufwand zur Realisierung des erfindungsgemäßen Rangierhilfesystems 6 ist dadurch vergleichsweise gering.

Weitere Bestandteile einer fahrzeugfesten Abstandssensorik 15 können beispielsweise ein Laserscanner, eine Satellitennavigationseinrichtung, z.B. ein GPS, und ein auslesbarer Kompass sein.

Die Funktionsweise des erfindungsgemäßen Rangierhilfesystems 6 wird im folgenden anhand der Fig. 5 und 6 näher erläutert:

Im Beispiel gemäß Fig. 5 handelt es sich beim Fahrzeug 1 wieder um ein Gespann 26, 27. Das Fahrzeug 1 ist mit seiner aktuellen Lage und Position auf dem Monitor 10 bzw. 20 abgebildet. Des Weiteren ist auf dem Monitor 10, 20 eine Umgebung 30 dargestellt, die hier exemplarisch aus zwei anderen Anhängern 31 besteht, zwischen denen eine Lücke 32 vorhanden ist. Der Anhänger 27 des Fahrzeugs 1 soll in diese Lücke 32 rückwärts hineingefahren werden. Der Fahrzeugführer betätigt zu diesem Zweck das jeweilige Eingabeelement, z.B. den Trackball 23. Das Eingabeelement (23) ist z.B. mit einem Cursor oder Mauszeiger 33 gekoppelt, der auf dem Monitor 10, 20 abgebildet wird. Durch entsprechende Betätigungen des Eingabeelements (23) kann der Fahrzeugführer nun den Cursor 23 auf dem Anhänger 27 positionieren und durch einen entsprechenden Eingabebefehl, z.B. durch Niederdrücken des Trackballs 23, eine Kopie der Anhängerkontur 27' auf dem Monitor 10, 20 beliebig verschieben und/oder drehen. Die Kopie der Anhängerkontur 27' ist in Fig. 5 durch eine unterbrochene Linie repräsentiert und exemplarisch entsprechend einem Pfeil 34 mit Hilfe des Eingabeelements (23) in die Lücke 32 zwischen den Anhängern 31 der Umgebung 30 hineinverstellt. Durch einen entsprechenden Eingabebefehl kann diese Wunschposition und Wunschlage für den Anhänger 27 als Solllage und Sollposition in das Rangierhilfesystem 6 eingegeben werden.

Anschließend wird der eigentliche Rangiervorgang, insbesondere manuell, gestartet, bei dem die Steuerung 9 den Rangieralgorithmus 12 abarbeitet. Dabei steuert die Steuerung 9 den Antriebsstrang 2 so an, dass der Anhänger 27 aus seiner Istlage und Istposition automatisch in die gewünschte Solllage und Sollposition überführt wird.

Wie bereits weiter oben erläutert, können Istlage, Istposition und Fahrzeugumgebung 30 auch mit Hilfe einer externen Bestimmungseinrichtung 16 ermittelt und am Monitor 10, 20 zur Anzeige gebracht werden. Beispielsweise kann ein Speditionshof mit einer vergleichsweise exakt arbeitenden Positions- und Lageerkennungseinrichtung für die darauf befindlichen Fahrzeuge 1 ausgestattet sein, mit deren Hilfe die aktuellen Istwerte für Lage und Position der auf dem Speditionshof befindlichen Fahrzeuge 1 relativ genau festgestellt werden können. Des Weiteren sind immobile Umgebungsbedingungen, wie zum Beispiel Verladerampen, Gebäude und andere Hindernisse einem derartigen System bekannt und ebenfalls relativ genau vermessen. Hierdurch kann insbesondere auf dem Monitor 10, 20 die Umgebung des Fahrzeugs 1 in einem vergleichsweise großen Bereich vollständig dargestellt werden. Die Daten für Istlage, Istposition und Umgebung können dem Rangierhilfesystem 6 mittels der Datenübertragungseinrichtungen 17, 18 übermittelt werden.

Das Fahrzeug 1 kann außerdem mit einem Notbremssystem ausgestattet sein (nicht dargestellt). Ein derartiges Notbremssystem kommuniziert mit der fahrzeugfesten Abstandssensorik 15 und veranlasst ein automatisches, rechtzeitiges Abbremsen des Fahrzeugs 1, wenn das Notbremssystem eine Kollisionsgefahr zwischen dem Fahrzeug 1 und einem Hindernis in der Umgebung des Fahrzeugs 1 erkennt.

Zweckmäßig kann nun das erfindungsgemäße Rangierhilfesystem 6 mit einem derartigen Notbremssystem gekoppelt sein, und zwar so, dass das Notbremssystem im Betrieb des Rangierhilfesystems 6 automatisch aktiviert wird. Auf diese Weise wird erreicht, dass das Fahrzeug 1 auch dann automatisch rechtzeitig abgebremst werden kann, wenn eine Kollisionsgefahr entsteht, während die Steuerung 9 den Rangieralgorithmus abarbeitet. Beispielsweise kann eine Kollisionsgefahr dann entstehen, wenn sich ein mobiles Hindernis in den vom Rangieralgorithmus ermittelten Fahrweg des Fahrzeugs 1 stellt oder bewegt.

Entsprechend Fig. 6 kann das Fahrzeug 1 auch ein Personenkraftwagen 37 sein. Die fahrzeugfeste Abstandssensorik 15 besitzt bei dieser Ausführungsform beispielsweise eine vergleichsweise kleine Reichweite, so dass auf dem Monitor 10, 20 nur ein vergleichsweise kleiner Bereich der Fahrzeugumgebung darstellbar ist. Im Beispiel gemäß Fig. 6 steht der Personenkraftwagen 37 seitlich neben einem parkenden Fahrzeug 35, von dessen Außenkontur die Abstandssensorik 15 nur den mit durchgezogener Linie gezeigten Teil erkennt und am Bildschirm 10, 20 darstellt. Der mit strichpunktierter Linie gezeigte Rest der Fahrzeugkontur sowie ein ebenfalls mit strichpunktierter Linie dargestellter Bordstein 36 werden von der Abstandssensorik 15 nicht erkannt und können dementsprechend auf dem Monitor 10, 20 nicht dargestellt werden. Dennoch kann der Fahrzeugführer mittels des Eingabeelements eine Kopie der Außenkontur 37' des Personenkraftwagens 37 wieder entsprechend dem Pfeil 34 auf dem Monitor verschieben, um so die gewünschte Sollposition und Solllage für das Fahrzeug 1 bzw. 37 dem System einzugeben. Nach dem Starten des Rangierbetriebs kann die Steuerung 9 wieder den Rangieralgorithmus 15 abarbeiten, der dann das Fahrzeug 1 bzw. den Personenkraftwagen 37 rückwärts und seitlich hinter dem parkenden Fahrzeug 35 automatisch einparkt.

## Patentansprüche

1. Kraftfahrzeug, insbesondere Nutzfahrzeug, mit einem elektronisch steuerbaren Antriebsstrang (2), der wenigstens ein Antriebsaggregat (3), eine Lenkanlage (4) und eine Bremsanlage (5) aufweist, wobei ein Rangierhilfesystem (6) vorgesehen ist, das eine Anzeigeeinrichtung (7), eine Eingabeeinrichtung (8) und eine Steuerung (9) aufweist, wobei die Eingabeeinrichtung (8) zur Eingabe einer Solllage und einer Sollposition für das Fahrzeug (1) ausgebildet ist, die Steuerung (9) zum Abarbeiten eines Rangieralgorithmus (12) ausgebildet ist und dabei den Antriebsstrang (2) zum Überführen des Fahrzeugs (1) von dessen Istlage und Istposition in dessen Solllage und Sollposition unter Berücksichtigung der Fahrzeugumgebung (30) ansteuert, **dadurch gekennzeichnet, dass** ein Notbremssystem vorgesehen ist, das mit einer fahrzeugfesten Abstandssensorik (15) kommuniziert und zum automatischen Abbremsen des Fahrzeugs (1) ausgebildet ist, wenn das Notbremssystem eine Kollisionsgefahr zwischen dem Fahrzeug (1) und einem Hindernis erkennt, dass das Rangierhilfesystem (6) mit dem Notbremssystem gekoppelt ist und ein automatisches Abbremsen des Fahrzeugs (1) bewirkt, wenn beim Abarbeiten des Rangieralgorithmus eine Kollisionsgefahr entsteht, dass die Eingabeeinrichtung (8, 21) mit der Anzeigeeinrichtung (7) kommuniziert, dass die Anzeigeeinrichtung (7) zusätzlich die mit der Eingabeeinrichtung (8, 21) eingegebene Solllage und Sollposition des Fahrzeugs (1) auf dem Monitor (10, 20) darstellt, dass die Anzeigeeinrichtung (7) zur Darstellung einer näheren Umgebung (30) des Fahrzeugs (1) auf einem Monitor (10, 20) ausgebildet ist, dass auf dem Monitor (10, 20) eine Kopie der Fahrzeug-/ Anhängerkontur (27') auf dem Monitor (10, 20) beliebig verschiebbar und/oder drehbar ist und dass durch einen entsprechenden Eingabebefehl diese Wunschposition für das/den Fahrzeug/Anhänger (27) als Sollposition in das Rangierhilfesystem (6) eingebbar ist.

2. Kraftfahrzeug nach Anspruch 1, **dadurch gekennzeichnet, dass** eine fahrzeugfeste Bestimmungseinrichtung (14) mit einer fahrzeugfesten Abstandssensorik (15) kommuniziert oder eine solche aufweist.

3. Kraftfahrzeug nach einem der Ansprüche 1 bis 2, **dadurch gekennzeichnet, dass** eine fahrzeugferne Bestimmungseinrichtung (16) zur Ermittlung der Daten für die Istposition, die Istlage und die Fahrzeugumgebung vorgesehen ist, die mit einem Datensender (17) verbunden ist, und dass ein fahrzeugfester Datenempfänger (18) vorgesehen ist, der mit dem Rangierhilfesystem (6) verbunden ist.

4. Kraftfahrzeug nach einem der Ansprüche 1 bis 3, **dadurch gekennzeichnet, dass** eine Fernbedieneinrichtung (19) vorgesehen ist, die einen zusätzlichen Monitor (20) und eine zusätzliche Eingabeeinrichtung (21) aufweist, und dass Datenübertragungseinrichtungen (17, 18) vorgesehen sind, über welche die Fernbedieneinrichtung (19) zumindest mit der Steuerung (9) kommuniziert.

5. Kraftfahrzeug nach einem der Ansprüche 1 bis 4, **dadurch gekennzeichnet, dass** eine Fernbedieneinrichtung (19) wenigstens ein Betätigungselement (22) zur manuellen Betätigung des Antriebsstrangs (2) aufweist.

6. Kraftfahrzeug nach einem der Ansprüche 1 bis 5, **dadurch gekennzeichnet, dass** die Eingabeeinrichtung (8, 21) wenigstens ein Eingabeelement (23) zur manuellen Eingabe der Solllage und Sollposition aufweist.

7. Kraftfahrzeug nach Anspruch 1 oder 3, **dadurch gekennzeichnet, dass** die fahrzeugfeste Abstandssensorik (15) mehrere, entlang der Außenkontur (25) des Fahrzeugs (1) vollständig umlaufend angeordnete Abstandssensoren (24), insbesondere Ultraschallsensoren, und/oder wenigstens eine Kamera (28), die am Fahrzeugheck angeordnet ist, und/oder einen Laserscanner und/oder ein Radargerät und/oder eine Satellitennavigationseinrichtung, insbesondere ein GPS, und/oder einen lesbaren Kompass aufweist.

## Claims

1. Motor vehicle, in particular a utility vehicle, having an electronically controlled drive train (2) which has at least one drive unit (3), one steering system (4) and one braking system (5), a maneuvering assistance system (6) which has a display device (7), an input device (8) and a control system (9) being provided, the input device (8) being designed to input a desired orientation and a desired position for the vehicle (1), the control system (9) being designed to process a maneuvering algorithm (12), and at the same time actuating the drive train (2) to transfer the vehicle (1) from its actual orientation and actual position into its desired orientation and desired position taking into account the surroundings (30) of the vehicle, **characterized**
**in that** an emergency braking system is provided which communicates with a distance sensor system (15) which is fixed to the vehicle and is designed to automatically brake the vehicle (1) if the emergency braking system detects a risk of a collision between the vehicle (1) and an obstacle, in that the maneuvering assistance system (6) is coupled to the emergency braking system and brings about automatic braking of the vehicle (1) if a risk of a collision arises when the maneuvering algorithm is being processed, in that the input device (8, 21) communicates with the display device (7), in that the display device (7) additionally displays on the monitor (10, 20) the desired orientation and desired position of the vehicle (1) which have been input with the input device (8, 21), in that the display device (7) is designed to display the relatively close surroundings (30) of the vehicle (1) on a monitor (10, 20), in that a copy of the vehicle contour/trailer contour (27') on the monitor (10, 20) can be displaced and/or rotated as desired on the monitor (10, 20), and in that this requested position for the vehicle/trailer (27') can be input as a desired position into the maneuvering assistance system (6) by means of an appropriate input command.

2. Motor vehicle according to Claim 1, **characterized in that** a determining device (14) which is fixed to the vehicle communicates with a distance sensor system (15) which is fixed to the vehicle, or has such a distance sensor system (15).

3. Motor vehicle according to one of Claims 1 to 2, **characterized in that** a determining device (16) which is remote from the vehicle and has the purpose of acquiring the data for the actual position, the actual orientation and the surroundings of the vehicle and is connected to a data transmitter (17) is provided, and **in that** a data receiver (18) which is fixed to the vehicle and is connected to the maneuvering assistance system (6) is provided.

4. Motor vehicle according to one of Claims 1 to 3, **characterized in that** a remote control device (19) which has an additional monitor (20) and an additional input device (21) is provided, and **in that** data transmission devices (17, 18) via which the remote control device (19) communicates at least with the control system (9) are provided.

5. Motor vehicle according to one of Claims 1 to 4, **characterized in that** a remote control device (19) has at least one activation element (22) for manually activating the drive train (2).

6. Motor vehicle according to one of Claims 1 to 5, **characterized in that** the input device (8, 21) has at least one input element (23) for manually inputting the desired orientation and desired position.

7. Motor vehicle according to Claim 1 or 3, **characterized in that** the distance sensor system (15) which is fixed to the vehicle has a plurality of distance sensors (24), in particular ultrasonic sensors, which are arranged running completely around and along the external contour (25) of the vehicle (1), and/or at least one camera (28) which is arranged on the rear of the vehicle, and/or a laser scanner and/or a radar device and/or a satellite navigation device, in particular a GPS, and/or a compass which can be read.

## Revendications

1. Véhicule automobile, en particulier véhicule utilitaire comprenant une chaîne cinématique (2), réglable électroniquement, qui comprend au moins un ensemble moteur (3), une direction (4) et un système de freinage (5), où il est prévu un système d'aide (6) facilitant les manoeuvres, qui présente un dispositif d'affichage (7), un dispositif d'entrée (8) et une commande (9), où le dispositif d'entrée (8) est configuré pour l'entrée d'une situation théorique et d'une position théorique pour le véhicule (1), la commande (9) est configurée pour l'exécution d'un algorithme de manoeuvre (12) et, ici, pilote la chaîne cinématique (2) pour faire passer le véhicule (1) de sa situation réelle et de sa position réelle, à sa situation théorique et à sa position théorique en tenant compte du milieu environnant (30) du véhicule,
**caractérisé**
**en ce qu'**il est prévu un système de freinage de secours qui communique avec un ensemble de capteurs de distance (15), fixe sur le véhicule, et est conçu pour le freinage automatique du véhicule (1) lorsque le système de freinage de secours détecte un risque de collision entre le véhicule (1) et un obstacle,
**en ce que** le système d'aide (6) facilitant les manoeuvres est couplé au système de freinage de secours et déclenche un freinage automatique du véhicule (1) lorsqu'un risque de collision apparaît lors de l'exécution de l'algorithme de manoeuvre,
**en ce que** le dispositif d'entrée (8, 21) communique avec le dispositif d'affichage (7),
**en ce que** le dispositif d'affichage (7) représente en outre, sur le moniteur (10, 20), la situation théorique et la position théorique du véhicule (1), entrées avec le dispositif d'entrée (8, 21),
**en ce que** le dispositif d'affichage (7) est conçu pour la représentation, sur un moniteur (10, 20), d'un milieu environnant plus proche (30) du véhicule (1),
**en ce que**, sur le moniteur (10, 20), une copie du contour (27') du véhicule / de la remorque peut être déplacée et / ou tournée, de manière quelconque, sur le moniteur (10, 20), et
**en ce que**, par une instruction d'entrée correspondante, cette position souhaitée pour le véhicule / la remorque (27) peut être entrée, comme position théorique, dans le système d'aide (6) facilitant les manoeuvres.

2. Véhicule selon la revendication 1, en ce qu'un dispositif de détermination (14), fixe sur le véhicule, communique avec un ensemble de capteurs de distance (15), fixe sur le véhicule, ou bien présente un tel ensemble de capteurs de distance.

3. Véhicule selon l'une ou l'autre des revendications 1 et 2, **caractérisé en ce qu'**il est prévu un dispositif de détermination (16) placé à distance du véhicule et servant à déterminer les données pour la position réelle, la situation réelle et le milieu environnant du véhicule, dispositif de détermination qui est connecté à un émetteur de données (17), et **en ce qu'**il est prévu un récepteur de données (18), fixe sur le véhicule, qui est connecté au système d'aide (6) facilitant les manoeuvres.

4. Véhicule automobile selon l'une quelconque des revendications 1 à 3, **caractérisé en ce qu'**il est prévu un dispositif de commande à distance (19) qui présente un moniteur supplémentaire (20) et un dispositif d'entrée supplémentaire (21), et **en ce qu'**il est prévu des dispositifs de transmission de données (17, 18) par lesquels le dispositif de commande à distance (19) communique au moins avec la commande (9) .

5. Véhicule automobile selon l'une quelconque des revendications 1 à 4, **caractérisé en ce qu'**un dispositif de commande à distance (19) présente au moins un élément d'actionnement (22) servant à l'actionnement manuel de la chaîne cinématique (2).

6. Véhicule automobile selon l'une quelconque des revendications 1 à 5, **caractérisé en ce que** le dispositif d'entrée (8, 21) présente au moins un élément d'entrée (23) servant à l'entrée manuelle de la situation théorique et de la position théorique.

7. Véhicule automobile selon la revendication 1 ou 3, **caractérisé en ce que** l'ensemble de capteurs de distance (15), fixe sur le véhicule, présente plusieurs capteurs de distance (24) disposés de façon complètement circulaire, le long du contour extérieur (25) du véhicule (1), en particulier des capteurs à ultrasons et / ou au moins une caméra (28) qui est disposée à l'arrière du véhicule, et / ou un scanner laser et / ou un dispositif radar et / ou un système de navigation par satellite, en particulier un système de positionnement de type GPS et / ou un compas lisible.
